# EUROPÄISCHE PATENTSCHRIFT

(11) **EP 1 200 868 B1**
(45) Veröffentlichungstag und Bekanntmachung des Hinweises auf die Patenterteilung: **15.01.2003**
(21) Anmeldenummer: 00954436.2
(22) Anmeldetag: 06.07.2000
(51) Int. Cl.: G02C 5/22

(54) **SCHRAUBVERBINDUNG FÜR SCHARNIERTEILE**
SCREW CONNECTION FOR HINGE PARTS
ASSEMBLAGE PAR VIS POUR PARTIES DE CHARNIERE

(30) Priorität: 09.07.1999 DE 19931837
(43) Veröffentlichungstag der Anmeldung: 02.05.2002
(73) Patentinhaber: OBE Ohnmacht & Baumgärtner GmbH & Co. KG, 75228 Ispringen (DE)
(72) Erfinder: BECK, Klaus, D-75326 Kämpfelbach (DE); WAGNER, Reiner, D-75228 Ispringen (DE)
(74) Vertreter: Gleiss, Alf-Olav, Dr.jur. Dipl.-Ing.
(86) Internationale Anmeldenummer: EP0006373
(87) Internationale Veröffentlichungsnummer: WO01004688

(56) Entgegenhaltungen:
- DE-A- 3 318 794
- DE-B- 1 196 397
- DE-B- 1 224 058
- DE-U- 9 114 045
- FR-A- 2 389 794

## Beschreibung

Die Erfindung betrifft eine Schraubverbindung für Scharnierteile, insbesondere einer Brillenfassung, gemäß Oberbegriff des Anspruchs 1.

Aus der DE-AS 11 96 397 geht eine Schraubverbindung der hier angesprochenen Art hervor, die eine Schraube zur Verbindung zweier Scharnierteile umfasst. Die Schraube durchgreift eine zylindrische Durchgangsöffnung in einem oberen Scharnierlappen, eine sich konisch verjüngende Durchgangsöffnung in einem mittleren Scharnierlappen und ist mittels eines Gewindes mit einem unteren Scharnierlappen verschraubbar. Der Schaft der Schraube ist von einer Kunststoffhülse umgeben, die beim Einschrauben in axialer Richtung zusammengedrückt wird, wodurch die Hülse gegen die Wandung der Durchgangsöffnung im mittleren Scharnierlappen gepresst wird und eine Gangregulierung möglich ist. Nachteilig hierbei ist, dass aufgrund dieser Ausgestaltung ein großes Materialvolumen der Hülse erforderlich ist, was zu einem großen Außendurchmesser der Hülse führt. Eine Miniaturisierung, wie sie häufig gefordert ist, ist daher aufgrund der großen Durchmesser der Scharnieraugen nicht möglich. Es hat sich gezeigt, dass beim Herausschrauben der Schraube die in die Durchgangsöffnungen der oberen und mittleren Scharnierlappen eingepresste Hülse in diesen Durchgangsöffnungen verbleibt und mit einem Spezialwerkzeug entfernt werden muss. Dies hat zur Folge, dass die Hülse nicht wieder verwendbar ist und nach jeder Demontage der Scharnierteile erneuert werden muss.

Aus der DE-AS 11 17 911 geht eine Gelenkverbindung mit einer einen Schraubenkopf, einen Scharnierstift und ein Gewinde aufweisenden Schraube hervor, die zur Erzeugung eines weichen Gangs der Scharnierteile eine angespritzte, aus Kunststoff bestehende Hülse aufweist. Beim Einschrauben der Schraube wird die Hülse, deren Gesamtlänge größer ist als die Höhe sämtlicher zugehöriger Bohrungen der Scharnierlappen, in Längsrichtung komprimiert, wodurch das Hülsenmaterial gegen die Bohrungsoberflächen gepresst und in Gewindegänge der Schraube gedrängt und in diesen eingequetscht wird. Aufgrund der sich bis in die Gewindegänge erstreckenden Hülse, was zu hohen Toleranzen führt, ist die Güte der Schraube nicht reproduzierbar. Außerdem weist die Schraube den Nachteil auf, dass bei der Demontage die Schraube aus der Hülse herausgedreht wird und die in den Bohrungen der Scharnierlappen eingequetschte Hülse umständlich mit Hilfe von Werkzeugen entfernt werden muss. Eine Wiederverwendung der Schraube ist daher nicht möglich.

Ferner geht aus der DE-AS 12 24 058 eine Schraubverbindung mit einer von einer Kunststoffhülse umgebenen Schraube hervor, bei der die im mittleren Scharnierlappen eingebrachte Durchgangsbohrung auf ihrer dem oberen Scharnierlappen zugewandten Öffnung einen größeren Durchmesser aufweist als die Durchgangsbohrung im oberen Scharnierlappen, so dass im eingeschraubten Zustand die Hülse soweit komprimiert wird, dass ein Hintergriff gebildet ist. Auch hier muss die Hülse bei einer Demontage der Scharnierteile mit Hilfe eines Werkzeugs aus der Bohrung entfernt werden. Mithin muss die Hülse bei jeder Demontage ersetzt werden. Nachteilig ist ferner, dass die Durchgangsbohrungen in den Scharnierteilen getrennt voneinander gebohrt und gegebenenfalls mit einem Gewinde versehen werden müssen, wodurch die Herstellung der Schraubverbindung sehr aufwendig ist.

Es ist daher Aufgabe der Erfindung eine Schraubverbindung der hier angesprochenen Art zu schaffen, die einen einfachen und somit kostengünstigen Aufbau sowie eine hohe Funktionssicherheit aufweist. Ein weiteres Ziel besteht darin, dass die Schraube und die Hülse mehrfach wiederverwendbar sind und eine einfache Demontage der Scharnierteile gewährleistet werden kann.

Zur Lösung der Aufgabe wird eine Schraubverbindung mit den Merkmalen des Anspruchs 1 vorgeschlagen. Diese umfasst eine Schraube mit einem ein Gewinde aufweisenden Schraubenschaft, der von einer elastische Eigenschaften aufweisenden Hülse umgeben ist. Die Hülse besteht vorzugsweise aus einem elastischen Material, beispielsweise einem Kunststoff. Im montierten Zustand durchgreift die Schraube mit ihrem Schraubenschaft eine erste Durchgangsöffnung in einem oberen Scharnierlappen und eine zweite Durchgangsöffnung in einem mittleren Scharnierlappen und ist mit einem unteren Scharnierlappen verschraubt. Mithin ist der Durchmesser der zweiten Durchgangsöffnung kleiner als oder gleich groß wie der Durchmesser der ersten Durchgangsöffnung. Die Schraubverbindung zeichnet sich dadurch aus, dass die Schraube mindestens eine Anlagefläche für die Hülse mit mindestens einer in Richtung der Ausschraubbewegung der Schraube ausgerichteten Mitnehmerfläche aufweist. Im Zusammenhang mit der vorliegenden Erfindung wird unter dem Begriff "Anlagefläche" der Flächenbereich der Schraube verstanden, an dem die Hülse angebracht, zum Beispiel angespritzt ist, und zumindest anliegt oder anstößt. Unter dem Begriff "Mitnehmerfläche" wird der Bereich der Anlagefläche der Schraube verstanden, an dem sich die Hülse beim Lösen der Schraubverbindung abstützt und dadurch gemeinsam mit der Schraube in Richtung der Ausschraubbewegung der Schraube verlagert und aus den Durchgangsöffnungen der Scharnierlappen herausgedrückt wird. Die Mitnehmerfläche ist gegenüber der Richtung der Ausschraubbewegung der Schraube in einem Winkel geneigt, derart, dass beim Ausschrauben zumindest eine in Richtung der Ausschraubbewegung gerichtete Kraftkomponente auf die Hülse wirkt, die ein Verschieben der Hülse innerhalb der Durchgangsöffnungen bewirken kann. Die an der Schraube angebrachte Hülse verbleibt also auch beim Lösen der Schraubverbindung an der Schraube. Dadurch, dass die Schraube und die Hülse ein quasi einstückiges beziehungsweise einteiliges Funktionsteil bilden, ist ein Lösen der Schraubverbindung in einfacher Weise möglich. Vorteilhaft ist ferner, dass die die Hülse aufweisende Schraube wiederverwendbar ist, wobei auch bei mehrfachem Ein- und Ausschrauben der Schraube eine präzise Gangregulierung des Scharniers möglich ist. Überdies ist die Schraube mit Hilfe der Hülse gegen ein selbständiges Lösen gesichert.

Aufgrund der unterschiedlichen Durchmesser der ersten und zweiten Durchgangsöffnungen können diese gemeinsam hergestellt werden, das heißt, die Durchgangsöffnungen werden in die ineinander greifenden Scharnierteile eingebracht, beispielsweise gebohrt. Mithin ist es möglich, dass dabei auch der untere Scharnierlappen mit einem Gewinde versehen wird. Durch die Herstellung der Durchgangsöffnungen in den Scharnierlappen bei ineinander gesteckten Scharnierteilen sind auch sehr kleine Toleranzen realisierbar. Bei einer anderen Ausführungsform der Schraubverbindung werden die Scharnierteile getrennt voneinander hergestellt, beispielsweise mit Hilfe der MIM-Technologie (Metal Injection Moulding), die eine hohe Form- und Maßgenauigkeit der Teile ermöglicht.

Bei einem bevorzugten Ausführungsbeispiel der Schraubverbindung ist im Schraubenschaft mindestens eine, vorzugsweise umlaufende, Ringnut vorgesehen, in der die Hülse angeordnet ist oder in die die Hülse mit einem Längsabschnitt eingreift. Bei einer ersten Ausführungsvariante sind die Länge der Hülse und die quer zur Längserstreckung der Schraube gemessene Breite der Ringnut gleich oder im wesentlichen gleich, so dass die Hülse vollständig in der Ringnut angeordnet ist. Die Mitnehmerfläche ist hier beispielsweise durch einen durch die Ringnut gebildeten Ringbund des Schraubenschafts gebildet. Bei der anderen Ausführungsvariante ist die Hülse im Bereich der Ringnut an der Schraube derart angebracht, dass ein Längsabschnitt am inneren Durchmesser der Hülse in die Ringnut eingreift und diese zumindest teilweise, vorzugsweise vollständig, ausfüllt. Bei dieser Ausgestaltung ist die Breite der Ringnut also kleiner als die Länge der Hülse, wobei die in Ausschraubrichtung ausgerichtete Mitnehmerfläche für die Hülse hier von der dem Gewinde der Schraube näherliegenden Seitenwand der Ringnut gebildet ist. Die Mitnehmerfläche kann bei beiden Ausführungsvarianten ohne weiteres gleich groß sein, da deren Größe nicht von der Breite der Ringnut, sondern unter anderem von der Ringnuttiefe abhängig ist.

Bevorzugt wird auch ein Ausführungsbeispiel der Schraubverbindung, das sich dadurch auszeichnet, dass der Schraubenschaft mindestens einen vorzugsweise umlaufenden Steg aufweist, der von der Hülse zumindest teilweise eingeschlossen ist. Der vorzugsweise einstückig mit dem Schraubenschaft verbundene Steg überragt in radialer Richtung den Schraubenschaft, wobei die dem Schraubenkopf zugewandte Seitenwandung des Stegs die Mitnehmerfläche zur Abstützung der Hülse beim Herausdrehen der Schraube aufweist.

Allen Ausführungsbeispielen der Schraubverbindung ist gemeinsam, dass beim Lösen der Schraubverbindung über die Mitnehmerfläche parallel zur Längserstreckung der Schraube gerichtete Verschiebekräfte auf die Hülse aufgebracht werden können, so dass diese von der Schraube aus den Durchgangsöffnungen der Scharnierlappen -in Richtung der Ausschraubbewegung der Schraube gesehen- herausgeschoben wird.

Nach einer Weiterbildung der Erfindung ist vorgesehen, dass der Schraubenschaft einen Ringbund aufweist, der im eingeschraubten Zustand im mittleren Scharnierlappen angeordnet ist. In vorteilhafter Ausführungsform dient der Ringbund als Führungsbund und weist einen Durchmesser auf, der geringfügig kleiner als oder gleich groß wie der Durchmesser der zweiten Durchgangsöffnung im mittleren Scharnierlappen ist. Vorzugsweise ist das Spiel zwischen dem Führungsbund und der zweiten Durchgangsöffnung nur sehr gering. Aufgrund dieser Ausgestaltung ist der Führungsbund sehr genau in der zweiten Durchgangsöffnung geführt, wodurch sichergestellt wird, dass bei einer solchen Kraftbeaufschlagung der Scharnierteile, bei der eine Scherwirkung auf die Schraube ausgeübt wird, die Schraube nicht verkippen kann, was zur Folge haben könnte, dass die im eingeschraubten Zustand verformte und unter anderem den oberen und mittleren Scharnierlappen mit Druckkräften beaufschlagende Hülse beschädigt wird. Es kann daher sichergestellt werden, dass ein selbständiges Lösen der Schraube mit Sicherheit verhindert und ein einmal eingestellter Gang nicht nach einer gewissen Zeit leichter wird und nachgestellt werden muss. Im eingeschraubten Zustand ist der Führungsbund vorzugsweise in der Mitte der zweiten Durchgangsöffnung angeordnet, wodurch eine optimale Abstützung und Sicherung gegen ein Verkippen der Schraube auch bei Kraftbeaufschlagung der Scharnierteile sichergestellt werden kann. Überdies kann eine Beschädigung der zweiten Durchgangsöffnung in ihren Randbereichen auch bei hohen, auf die Scharnierteile wirkenden Kräften ausgeschlossen werden.

Bevorzugt wird auch ein Ausführungsbeispiel der Schraubverbindung, das sich dadurch auszeichnet, dass der Durchmesser des Schraubenschafts im Bereich der Ringnut kleiner ist als der Durchmesser der zweiten Durchgangsöffnung. Im eingeschraubten Zustand erstreckt sich der die Ringnut aufweisende Teil des Schraubenschafts bis in die zweite Durchgangsöffnung des mittleren Scharnierlappens, so dass die beim Einschrauben in Richtung ihrer Längsmittelachse gestauchte Hülse so zusammengequetscht wird, dass das verdrängte Hülsenmaterial sowohl in axialer Richtung in den zwischen der Umfangsfläche der zweiten Durchgangsöffnung und dem die Ringnut aufweisenden Teil des Schraubenschafts gebildeten Ringraum gedrückt wird und diesen zumindest teilweise, vorzugsweise vollständig, füllt als auch quer zur Einsschraubbewegung in den zwischen der Umfangsfläche der ersten Durchgangsöffnung im oberen Scharnierlappen und dem Schraubenschaft sowie gegebenenfalls durch die Schraubenkopfunterseite gebildeten Ringraum, wodurch dieser ebenfalls zumindest teilweise mit dem Hülsenmaterial gefüllt wird. Die zusammengequetschte Hülse drückt über zumindest einen Teil der Umfangsfläche auf einer Teilhöhe der ersten und zweiten Durchgangsöffnungen sowie -in Einschraubrichtung gesehen- auf die Oberseite des mittleren Scharnierlappens. Durch Variieren der auf den mittleren Scharnierlappen wirkenden Druckkräfte, was durch tieferes Einschrauben beziehungsweise teilweises Herausschrauben der Schraube möglich ist, kann der Gang der Scharnierteile reguliert und präzise eingestellt werden.

Außerdem wird ein Ausführungsbeispiel der Schraubverbindung bevorzugt, bei der in der Umfangsfläche der ersten Durchgangsöffnung mindestens eine parallel oder im wesentlichen parallel zur Richtung der Ein- und Ausschraubbewegung der Schraube verlaufende, zur Sicherung der Hülse gegen Verdrehen um ihre Längsmittelachse dienende Längsnut vorgesehen ist. Beim Einschrauben wird das Hülsenmaterial in die Längsnut, vorzugsweise über eine gewisse Teilhöhe der Längsnut hineingedrängt. Hierdurch wird ein Formschluss zwischen Hülse und oberen Scharnierlappen realisiert der verhindert, dass beim Lösen der Schraubverbindung sich die Hülse gemeinsam mit der Schraube drehen kann. Beim Ausschrauben der Schraube dreht sich die Hülse also nicht mit, sondern wird aufgrund ihrer Abstützung an der Mitnehmerfläche der Anlagefläche lediglich in Richtung der Ausschraubbewegung der Schraube verschoben. Beim Ausschrauben findet also eine Relativdrehbewegung zwischen der Schraube und der Hülse statt. Bei einer weiteren Ausführungsform sind in die Umfangsfläche der ersten Durchgangsöffnung sehr viele in einem nur geringen Abstand voneinander angeordnete Längsnuten eingebracht, die beispielsweise durch eine Rändelung gebildet sind.

Die Längsnut(en) ist(sind) bei ineinander gesteckten Scharnierteilen vorzugsweise spanlos, zum Beispiel durch Einstanzen, Prägen oder dergleichen, herstellbar. Bei einer anderen Ausführungsvariante der Schraubverbindung werden die Scharnierteile einzeln, vorzugsweise mit Hilfe der MIM-Technologie (Metal Injection Moulding) hergestellt, wodurch eine hohe Präzision der Teile sichergestellt werden kann. Die durch Sintern hergestellten Teile des Scharniers werden also getrennt voneinander fertiggestellt. Es hat sich gezeigt, dass besonders auch die Ausführungsvariante der Schraubverbindung, bei der die Umfangsfläche der ersten Durchgangsöffnung im oberen Scharnierlappen mit einer Rändelung versehen ist, mit der MIM-Technologie vorteilhaft herstellbar ist.

Bei einer vorteilhaften Ausführungsform der Schraubverbindung ist der Außendurchmesser der Hülse gleich groß wie oder nur geringfügig kleiner als der Durchmesser der ersten Durchgangsöffnung, so dass das zum Einschrauben erforderliche Drehmoment nur relativ gering ist. Auch wird das Ansetzen der Schraube erleichtert. Selbstverständlich kann bei einem anderen Ausführungsbeispiel der Außendurchmesser der Hülse auch größer oder deutlich kleiner sein als der Durchmesser der ersten Durchgangsöffnung. Die aus einem elastischen Material, beispielsweise einem Kunststoff, hergestellte Hülse kann unterschiedlichste Formen aufweisen. Bei einem vorteilhaften Ausführungsbeispiel weist die Hülse einen kreisförmigen oder kreisringförmigen Querschnitt auf. Selbstverständlich sind auch Hülsen einsetzbar, die einen mehreckigen, zum Beispiel einen viereckigen Querschnitt aufweisen. Wichtig ist, dass die Hülse beim Einschrauben zumindest soweit deformierbar ist, dass das Hülsenmaterial in die Durchgangsöffnung im mittleren Scharnierlappen und gegebenenfalls in die mindestens eine Längsnut in der Umfangsfläche der ersten Durchgangsöffnung fließt sowie gegen zumindest einen Teil der Umfangsfläche der Durchgangsöffnung im oberen Scharnierlappen und gegebenenfalls die Oberseite des mittleren Scharnierlappens drückt.

Weitere vorteilhafte Ausführungsformen der Schraubverbindung ergeben sich aus den übrigen Unteransprüchen.

Die Erfindung wird im folgenden anhand der Zeichnungen näher erläutert. Dabei zeigen:
- Figuren 1A bis 1D: insgesamt drei Querschnitte und eine Draufsicht auf ein erstes Ausführungsbeispiel einer Schraubverbindung für Scharnierteile;
- Figuren 2A bis 2D: insgesamt drei Querschnitte und eine Draufsicht auf ein zweites Ausführungsbeispiel der Schraubverbindung;
- Figuren 3A bis 3D: jeweils eine Ansicht eines dritten Ausführungsbeispiels der Schraubverbindung;
- Figuren 4A bis 4B: jeweils eine Ansicht eines vierten Ausführungsbeispiels der Schraubverbindung;
- Figuren 5A und 5B: eine Draufsicht und einen Querschnitt eines fünften Ausführungsbeispiels der Schraubverbindung;
- Figur 6: einen Querschnitt durch ein sechstes Ausführungsbeispiel der Schraubverbindung;
- Figuren 7 bis 10B: vier Ausführungsbeispiele einer Schraube und
- Figuren 11a bis 11c: einen Querschnitt, eine Draufsicht und einen Ausschnitt eines siebten Ausführungsbeispiels der Schraubverbindung in vergrößertem Maßstab.

Figur 1A zeigt einen Längsschnitt durch eine Schraubverbindung 1 für Scharnierteile beispielsweise einer Brillenfassung, die ein zweilappiges Scharnierteil 3 und ein einlappiges Scharnierteil 5 umfasst, die ineinander gesteckt sind. Das zweilappige Scharnierteil 3 ist beispielsweise mit der Brillenfassung und das einlappige Scharnierteil 5 mit einem Brillenbügel verbunden. Das zweilappige Scharnierteil 3 weist einen oberen Scharnierlappen 7 und einen unteren Scharnierlappen 9 und das einlappige Scharnierteil 5 einen zwischen den oberen und unteren Scharnierlappen 7, 9 mit vorzugsweise geringem Spiel angeordneten mittleren Scharnierlappen 11 auf. Im oberen Scharnierlappen 7 ist eine erste Durchgangsöffnung 13 und im mittleren Scharnierlappen 11 eine zweite Durchgangsöffnung 15 so eingebracht, dass deren Längsachsen miteinander fluchten. Die Durchgangsöffnungen 13, 15 sind hier im Querschnitt kreisrund ausgebildet. Bei einem anderen Ausführungsbeispiel können diese auch einen mehreckigen, beispielsweise quadratischen, oder kreisförmigen Querschnitt aufweisen. Der Durchmesser D1 der ersten Durchgangsöffnung 13 ist größer als der Durchmesser D2 der zweiten Durchgangsöffnung 15, wodurch eine ringförmige Anlageschulter 17 gebildet ist. Im unteren Scharnierlappen 9 ist eine durchgehende Gewindebohrung 19 eingebracht, deren Längsachse mit den Längsachsen der ersten und zweiten Durchgangsöffnungen 13, 15 fluchtet. Von der Unterseite 21 des zweilappigen Scharnierteils 3 entspringt in dem Bereich des unteren Scharnierlappens 9 ein konisch zulaufender Absatz 23, durch den die Tiefe der Gewindebohrung 19 vergrößert ist.

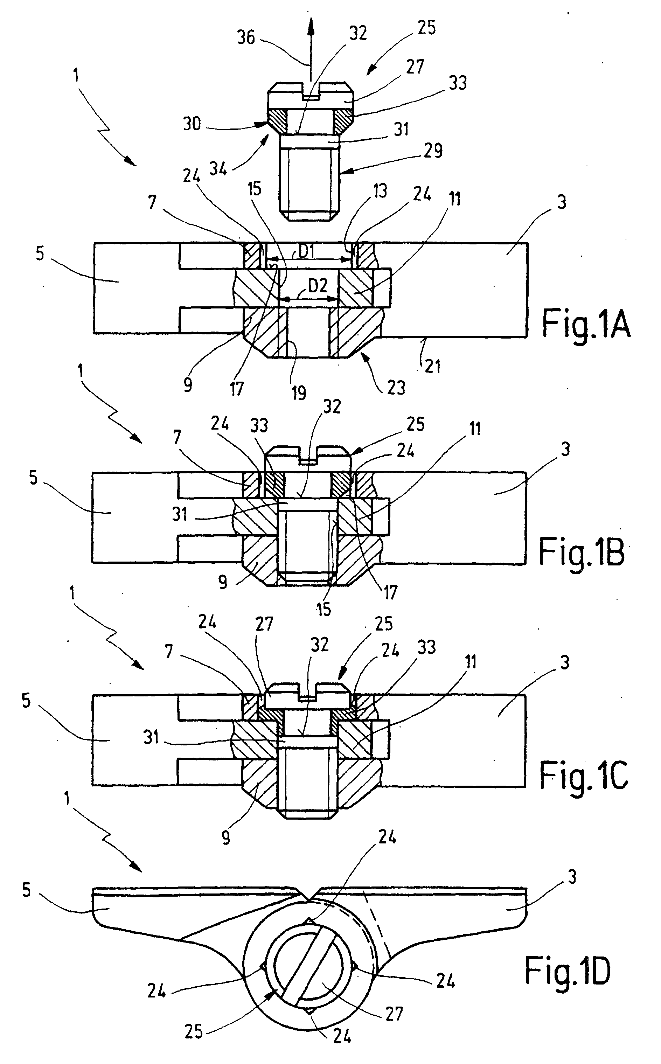

In die Umfangsfläche der ersten Durchgangsöffnung 13 sind bei diesem Ausführungsbeispiel insgesamt vier Längsnuten 24 (Figur 1D) eingebracht, die parallel zur Längsmittelachse der Durchgangsöffnung 13 verlaufen und hier einen keilförmigen Querschnitt aufweisen. Die Längsnuten 24 erstrecken sich durch die gesamte Durchgangsöffnung 13. Auf die Funktion der Längsnuten 24 wird nachfolgend näher eingegangen.

Die Schraubverbindung 1 umfasst ferner eine Schraube 25, die einen Schraubenkopf 27 und einen mit einem Gewinde versehenen Schraubenschaft 29 aufweist. In den Schraubenschaft 29 ist eine umlaufende Ringnut 30 eingebracht, wodurch am Schraubenschaft 29 ein Ringbund 31 gebildet ist. Wie aus Figur 1A ersichtlich, erstreckt sich die Ringnut 30 bis unmittelbar an die Unterseite des Schraubenkopfs 27. Der Ringbund 31 ist als Führungsbund ausgebildet, das heißt, dessen Durchmesser ist im wesentlichen gleich groß wie oder etwas kleiner als der Durchmesser D2 der zweiten Durchgangsöffnung 15, wie aus Figur 1C, in der die Schraube 25 im eingeschraubten Zustand dargestellt ist, ersichtlich. Mithin zeigt Figur 1C, dass der Außendurchmesser des Schraubenkopfs 27 kleiner ist als der Durchmesser D1 der ersten Durchgangsöffnung 13, wodurch der Schraubenkopf 27 beim Einschrauben in die erste Durchgangsöffnung 13 verlagert und von dieser teilweise aufgenommen wird.

Aufgrund der unterschiedlichen Durchmesser des Schraubenschafts 29 im Bereich der Ringnut 30 und des Ringbunds 31 ist eine umlaufende, kreisringförmige Mitnehmerfläche 32 gebildet, die bei diesem Ausführungsbeispiel quer zur Richtung der Aus- bzw. Einschraubbewegung der Schraube 25 verläuft. Die Größe der ebenen Mitnehmerfläche 32 ist abhängig von der Durchmesserdifferenz des Schraubenschafts 29 im Bereich der Ringnut 30 und des Ringbunds 31.

In der Ringnut 30 des Schraubenschafts 29 ist eine vorzugsweise aus einem elastischen Material, zum Beispiel aus Kunststoff, bestehende Hülse 33 angeordnet, die einen kreisringförmigen Querschnitt aufweist. An ihrem einen Ende stößt die Hülse 33 gegen die Unterseite des Schraubenkopfs 27 und liegt mit ihrem anderen Ende an der in Richtung der Ausschraubbewegung (Pfeil 36) der Schraube ausgerichteten Mitnehmerfläche 32 an. Es ist auch möglich, dass die Hülse 33 so lang ausgebildet ist, dass sie zwischen dem Schraubenkopf 27 und der Mitnehmerfläche 32 eingespannt ist, also bereits mit in axialer Richtung gerichteten Kräften beaufschlagt wird. An ihrem dem Ringbund 31 zugewandten Ende weist die einstückig ausgebildete Hülse 33 einen in Richtung auf das Gewinde sich verjüngenden Konus 34 auf. Aufgrund dieser Ausgestaltung steigen die beim Einschrauben auf den mittleren Scharnierlappen 11 wirkenden Kräfte sanft an. Durch die progressive Erhöhung der auf die der Hülse 33 zugewandten Seite des mittleren Scharnierlappens 11 wirkenden Anpresskraft kann eine unzulässig große Deformation des mittleren Scharnierlappens 11 vermieden werden.

Die Länge der vorzugsweise auf den Schraubenschaft 29 aufgespritzten Hülse 33 entspricht hier im wesentlichen dem Abstand zwischen der Unterseite des Schraubenkopfs 27 und dem Ringbund 31. Im Bereich ihres im Querschnitt kreiszylindrischen Längsabschnitts weist die Hülse 33 einen Außendurchmesser auf, der bei diesem bevorzugten Ausführungsbeispiel gleich groß wie oder geringfügig kleiner ist als der Durchmesser D1 der ersten Durchgangsöffnung 13. Das während des Einschraubens der Schraube 25 in die ersten Gewindegänge der Gewindebohrung 19 erforderliche Drehmoment ist daher nur gering.

Beim Einschrauben wird die Hülse 33 in axialer Richtung zusammengedrückt, wodurch Hülsenmaterial in die Längsnuten 24 hineingedrängt wird, so dass die Längsnuten 24 -wie aus Figur 1C ersichtlich-über einen Teil ihrer Höhe ausgefüllt werden. Durch das durch eine Stauchung der Hülse 33 in axialer Richtung der Längsnuten 24 eingedrückte Hülsenmaterial wird ein Formschluss realisiert, der zur Sicherung der Hülse 33 gegen Verdrehen um ihre Längsmittelachse dient. Die Verdrehsicherung ist auch dann noch wirksam, wenn nach dem Einschrauben der Schraube 25 die Schraubverbindung 1 nochmals vollständig gelöst oder lediglich die Schraube 25 noch ein wenig gelöst wird, beispielsweise zur Gangregulierung.

Im folgenden wird die Funktionsweise der Schraubverbindung 1 näher erläutert: Beim Einschrauben der Schraube 25 in die Gewindebohrung 19 fährt die Hülse 33 in die erste Durchgangsöffnung 13 im oberen Scharnierlappen 7 ein. Aufgrund des geringen Außenmaßes der Hülse 33 wirken praktisch keine Druckkräfte auf den Hülsenmantel. In Figur 1B ist die Schraube 25 in einer Position dargestellt, in der sie soweit in die Gewindebohrung 19 eingeschraubt ist, dass die Hülse 33 mit ihrem den Konus 34 aufweisenden Ende an der durch die unterschiedlichen Durchmesser der Durchgangsöffnungen 11, 13 gebildeten Anlageschulter 17 anstößt. In dieser Position befindet sich der Ringbund 31 bereits in der zweiten Durchgangsöffnung 15 im mittleren Scharnierlappen 11. Dadurch sind die beiden Scharnierteile 3, 5 exakt zueinander ausgerichtet, also bevor eine Stauchung der Hülse 33 in Richtung ihrer Längsmittelachse erfolgt. Durch ein weiteres Einschrauben gelangt die Schraube 25 von der in Figur 1B dargestellten Position in die in Figur 1C dargestellte Position, in der der Schraubenkopf 27 teilweise von der ersten Durchgangsöffnung 13 im oberen Scharnierlappen 7 aufgenommen ist. Dabei wird die sich an ihrem einen Ende an der Unterseite des Schraubenkopfs 27 und an ihrem anderen Ende gegen die Anlageschulter 17 gedrückte Hülse 33 derart zusammengequetscht, dass das sich in radialer und in axialer Richtung ausdehnende Hülsenmaterial bis in den zwischen der Umfangsfläche der zweiten Durchgangsöffnung 15 und dem Teil des Schraubenschafts 29, der die die Hülse 33 aufnehmende Ringnut 30 aufweist, hineingedrückt wird und diesen vollständig ausfüllt. Außerdem wird die Hülse 33 gegen die durch die Stufenbohrungen (Durchgangsöffnungen 13, 15) gebildete Anlageschulter 17, also auf die Oberseite des mittleren Scharnierlappens 11, und in die Längsnuten 24 in der ersten Durchgangsöffnung 13 des oberen Scharnierlappens 7 sowie gegen die zwischen den Längsnuten 24 liegenden Umfangsflächenbereiche der ersten Durchgangsöffnung 13 gepresst. Da die Hülse 33 aus einem leicht verformbaren, elastischen Material besteht, ist der Schraubenkopf 27 teilweise in die sich an der Anlageschulter 17 abstützende, einen Teil der ersten Durchgangsöffnung 13 ausfüllenden Hülse 33 eingedrückt. Die Hülse 33 ist derart verformt, dass das Hülsenmaterial bis in den zwischen der Außenseite des Schraubenkopfs 27 und der Umfangsfläche der ersten Durchgangsöffnung 13 gebildeten Ringraum fließt. Aus Figur 1C ist ferner ersichtlich, dass im eingeschraubten Zustand der Ringbund 31 in etwa in der Mitte des mittleren Scharnierlappens 11 angeordnet ist, wodurch bei an den Scharnierteilen 3, 5 wirkenden äußeren Kräften diese in den Ringbund 31 der Schraube 25 eingeleitet und von diesem aufgenommen werden, ohne dass dabei die Schraube 25 verkippt.

Die beim Einschrauben in Richtung der Einschraubbewegung der Schraube bewegte Hülse 33 beaufschlagt einen Umfangsflächenbereich der zweiten Durchgangsöffnung 15 und einen Umfangsflächenbereich der ersten Durchgangsöffnung 13 mit Druckkräften, die bei diesem Ausführungsbeispiel quer zur Einschraubrichtung verlaufen. Überdies werden über die Anlageschulter 17 in Richtung der Einschraubbewegung der Schraube gerichtete Kräfte auf die Oberseite des mittleren Scharnierlappens 11 aufgebracht. Die über die Hülse 33 auf den mittleren Scharnierlappen 11 aufgebrachten Kräfte verlaufen hier senkrecht zueinander und ermöglichen eine Gangregulierung der Scharnierteile. Je weiter die Schraube 25 eingeschraubt wird, desto größer werden die auf den mittleren Scharnierlappen 11 wirkenden Kräfte und bei einem teilweise Ausschrauben werden die Kräfte verringert, wodurch sich ein weicherer Gang einstellt. Nachdem die Schraube 25 einmal eingeschraubt worden ist und die Hülse 33 in der obengenannten Weise verformt und in die verschiedenen, zwischen den Scharnierteilen 3, 5 und der Schraube 25 gebildeten Räume gequetscht worden ist, kann durch Ein- beziehungsweise Ausschrauben der Schraube ein präzise Gangregulierung vorgenommen werden. Außerdem wird durch die Stauchung der Hülse 33 in Richtung ihrer Längsmittelachse eine Sicherung der Schraube 25 gegen ein selbständiges Lösen realisiert. Es bleibt festzuhalten, dass mit Hilfe der anhand der Figuren 1A bis 1D beschriebenen Schraubverbindung 1 sowohl eine Gangregulierung als auch eine Schraubsicherung realisiert ist.

Im eingeschraubten Zustand dreht sich die Hülse 33 immer mit dem zweilappigen Scharnierteil 3 und mit der Schraube 25 mit, was durch einen Formschluss (Längsnuten 24) zwischen der Hülse 33 und dem zweilappigen Scharnierteil 3 erreicht wird. Ein weiterer Vorteil der Schraubverbindung 1 besteht darin, dass vom einlappigen Schamierteil 5 nur ein sehr geringes Drehmoment auf die Schraube 25 übertragen wird. Die Schraubverbindung 1 kann auch für sehr dünne Scharnierteile mit vorzugsweise dünnen Scharnierlappen eingesetzt werden.

Beim Lösen der Schraubverbindung 1 dient die Mitnehmerfläche 32 des Schraubenschafts 29 als Widerlager für die Hülse 33, welche aufgrund ihres Formschlusses mit den Längsnuten 24 gegen ein Verdrehen um ihre Längsmittelachse gesichert ist. Der Formschluss zwischen der Hülse 33 und den Längsnuten 24 bleibt im allgemeinen auch nach dem Lösen der Schraube 25 bestehen, da die Hülse beim erstmaligen vollständigen Einschrauben der Schraube 25 zumindest abschnittsweise plastisch, also irreversibel verformt wird. Beim Ausschrauben stützt sich die Hülse 33 mit ihrem dem Schraubenkopf 27 abgewandten Ende an der in Richtung der Ausschraubbewegung (Pfeil 36) der Schraube 25 ausgerichteten Mitnehmerfläche 32 ab, so dass die Hülse 33 in Richtung der Ausschraubbewegung verschoben wird. Dadurch, dass die Hülse 33 mit Hilfe der Mitnehmerfläche 32 der Schraube 25 aus den Durchgangsöffnungen der Scharnierteile herausgedrängt wird, ist ein Eindrehen der Hülse 33 in das Gewinde der Schraube 25 ausgeschlossen.

Bei einem anderen, in den Figuren nicht dargestellten Ausführungsbeispiel der Schraubverbindung 1 ist die Hülse 33 lediglich elastisch verformt, so dass nach dem Lösen der Schraube der Formschluss mit dem Scharnierteil 3 wieder aufgehoben wird.

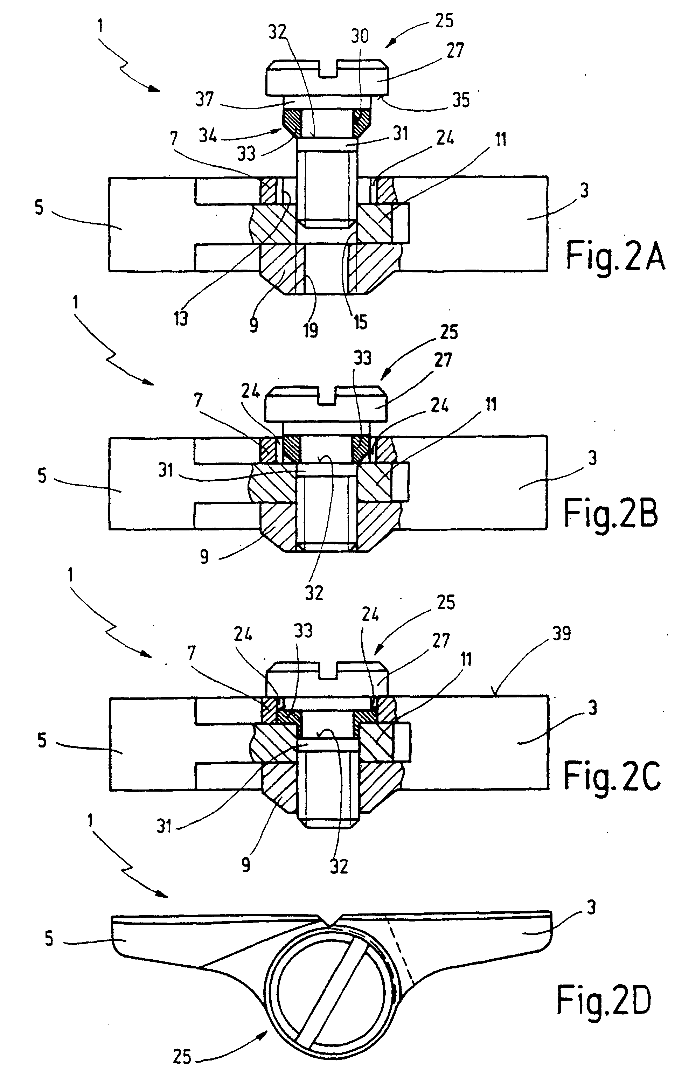

Figuren 2A bis 2D zeigen jeweils eine Ansicht eines weiteren Ausführungsbeispiels der Schraubverbindung 1. Gleiche Teile sind mit gleichen Bezugszeichen versehen, so dass insofern auf die Beschreibung zu den Figuren 1A bis 1D verwiesen wird. Im Folgenden wird lediglich auf die Unterschiede näher eingegangen. Die Schraube 25 weist an der Unterseite 35 ihres Schraubenkopfs 27 einen zylindrischen Ansatz 37 auf, dessen Durchmesser hier in etwa dem Außendurchmesser der Hülse 33 entspricht. Die in der in den Schraubenschaft 29 eingebrachten Ringnut 30 angeordnete Hülse 33 stützt sich beim Einschrauben mit ihrem einen Ende an dem zylindrischen Ansatz 37 und beim Ausschrauben mit ihrem anderen Ende an der Mitnehmerfläche 32 des Ringbunds 31 ab. Im vollständig angeschraubten Zustand (Figur 2C) liegt der Schraubenkopf 27 mit seiner Unterseite 35 auf der Oberseite 39 des zweilappigen Scharnierteils 3 beziehungsweise dem oberen Scharnierlappen 7 an. Um in dieser Stellung die in Richtung der Ein- bzw. Ausschraubbewegung der Schraube auf die Hülse 33 wirkenden Druckkräfte zu erhöhen, kann durch ein weiteres Einschrauben der obere Scharnierlappen 7 zumindest in seinem Randbereich vom Schraubenkopf 27 eingedrückt werden, wodurch eine Verkleinerung des Abstands zwischen dem zylindrischen Ansatz 37 und der Anlageschulter 17 der Stufenbohrung möglich ist, was zu einer Erhöhung der auf die Hülse 33 wirkenden Kräfte führt. Die in den Figuren 2A bis 2C dargestellte Schraube 25 wird beispielsweise bei dünnwandigen Scharnierteilen eingesetzt.

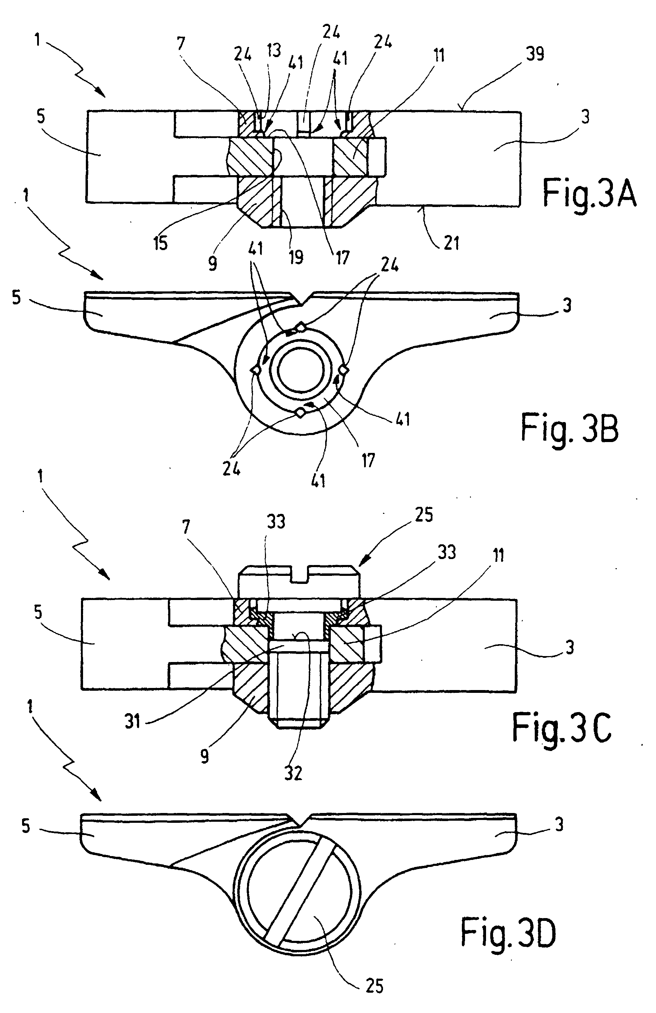

Figuren 3A bis 3D zeigen jeweils eine Ansicht eines drittes Ausführungsbeispiel der Schraubverbindung 1, wobei lediglich in den Figuren 3C und 3D die Schraube 25 im eingeschraubten Zustand dargestellt ist. Teile, die mit denen anhand der vorangegangenen Figuren beschriebenen Teile übereinstimmen, sind mit gleichen Bezugszeichen versehen, so dass insofern auf die Beschreibung oben verwiesen wird.

In die Umfangsfläche der ersten Durchgangsöffnung 13 des oberen Scharnierlappens 7 sind vier parallel zur Längsmittelachse der ersten Durchgangsöffnung 13 verlaufende Längsnuten 24 angeordnet, die durch ein spanloses Arbeitsverfahren, beispielsweise Stanzen oder Prägen, vorzugsweise bei zusammengesteckten Scharnierteilen 3, 5, eingebracht sind. Durch die abschnittsweise Verformung der Umfangsfläche der ersten Durchgangsöffnung 13 von der Oberseite 39 des Scharniers her, ist auf dem mittleren Scharnierlappen 11 zugewandten Randbereich der Durchgangsöffnung 13 zumindest eine Nase 41 gebildet, die radial in Richtung der Mitte der Durchgangsöffnung 13 verläuft. Es sind vorzugsweise mehrere bezüglich der Hülse 33 als Mitnehmer wirkende Nasen 41 vorgesehen, die hier auf der Anlageschulter 17 aufliegen.

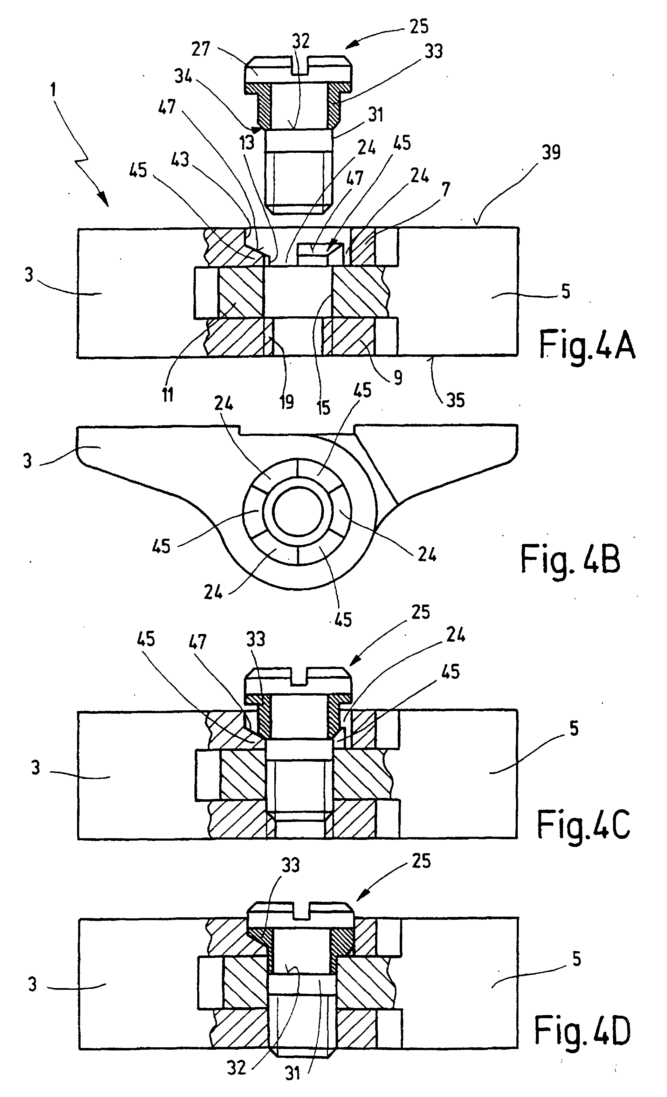

Figuren 4A bis 4D zeigen jeweils eine Ansicht eines weiteren Ausführungsbeispiels der Schraubverbindung 1. Gleiche Teile sind mit gleichen Bezugszeichen versehen, so dass insofern auf die Beschreibung zu den vorangegangenen Figuren verwiesen wird. In der ersten Durchgangsöffnung 13 im oberen Scharnierlappen 7, deren Durchmesser gleich groß ist wie der Durchmesser der zweiten Durchgangsöffnung 15 im mittleren Scharnierlappen 11, ist auf ihrer dem mittleren Scharnierlappen 11 abgewandten Seite eine Senkung 43 eingebracht, die sich in etwa bis in die Mitte des oberen Scharnierlappens 7 erstreckt. Ferner sind in die Umfangsfläche der ersten Durchgangsöffnung 13 bei diesem Ausführungsbeispiel insgesamt drei Längsnuten 24 eingebracht, zum Beispiel gestanzt, die in Draufsicht (Figur 4B) gesehen kreisausschnittsförmig ausgebildet sind. Die drei parallel zur Richtung der Ein- und Ausschraubbewegung der Schraube verlaufenden Längsnuten 24 sind gleich groß, das heißt, sie erstrecken sich über gleiche Winkelbereiche der Durchgangsöffnung 13. Die Anordnung der Längsnuten 24 ist sternförmig, das heißt, sie sind über den Umfang der ersten Durchgangsöffnung 13 in einem Abstand von 120° voneinander angeordnet. Durch die Längsnuten 24 sind drei Wandsegmente 45 gebildet, die in Draufsicht gesehen kreisringausschnittsförmig ausgebildet sind. Wie aus Figur 4A ersichtlich, ist die Oberseite 47 der Wandsegmente 45 gegenüber der Richtung der Ein- und Ausschraubbewegung der Schraube geneigt. Der Neigungswinkel ist hier in etwa so groß wie der Winkel des Konus' 34 der Hülse 33, so dass bereits ohne eine Verformung der Hülse 33 eine flächige Anlage zwischen der Hülse 33 und den Wandsegmenten 45 realisiert ist (Figur 4C). Die Anzahl der Längsnuten 24 und somit auch die Anzahl der Wandsegmente 45 ist variierbar und kann bei einem anderen Ausführungsbeispiel auch zwei oder mehr als drei, beispielsweise vier, fünf oder sechs betragen.

Die Hülse 33 weist bei dem in den Figuren 4A bis 4D dargestellten Ausführungsbeispiel an ihrem dem Schraubenkopf 27 zugewandten Ende einen durchmessergrößeren Bereich auf, wobei der Durchmesser in etwa gleich groß ist wie der Durchmesser der Senkung 43 und der des Schraubenkopfs 27. An den durchmessergrößeren Bereich schließt sich ein durchmesserkleinerer Bereich an, wobei dieser Durchmesser etwas größer ist als der Durchmesser des Ringbunds 31. Beim Einschrauben der Schraube 25 stützt sich die Hülse 33 an ihrem, den durchmessergrößeren Bereich aufweisenden Ende an der Unterseite des Schraubenkopfs 27 und wird mit ihrem anderen Ende gegen die Oberseite 47 der Wandsegmente 45 gedrückt. Dabei wird die Hülse 33 zusammengequetscht, derart, dass das Hülsenmaterial von oben, also in axialer Richtung in die Längsnuten 24 zur Ausbildung einer Verdrehsicherung für die Hülse 33 und in den zwischen der Umfangsfläche der zweiten Durchgangsöffnung 15 im mittleren Scharnierlappen 11 und dem Schraubenschaft 29 gebildeten Ringraum gedrückt. Dadurch, dass die ersten und zweiten Durchgangsöffnungen 13, 15 gleiche Durchmesser aufweisen, werden lediglich im Bereich der Längsnuten 45 Kräfte über die Hülse 33 auf die Oberseite 39 des mittleren Scharnierlappens 11 aufgebracht. Ferner wird das Hülsenmaterial -wie bei allen anderen Ausführungsbeispielen der Schraubverbindung 1 auchgegen zumindest einen Teil der Umfangsflächen der Durchgangsöffnungen 13, 15 gepresst.

Die Scharnierteile 3, 5 der anhand der Figuren 4A bis 4D beschriebenen Schraubverbindung 1 weisen den Vorteil auf, dass herkömmliche Schrauben verwendet werden können, was insbesondere für Optiker vorteilhaft ist.

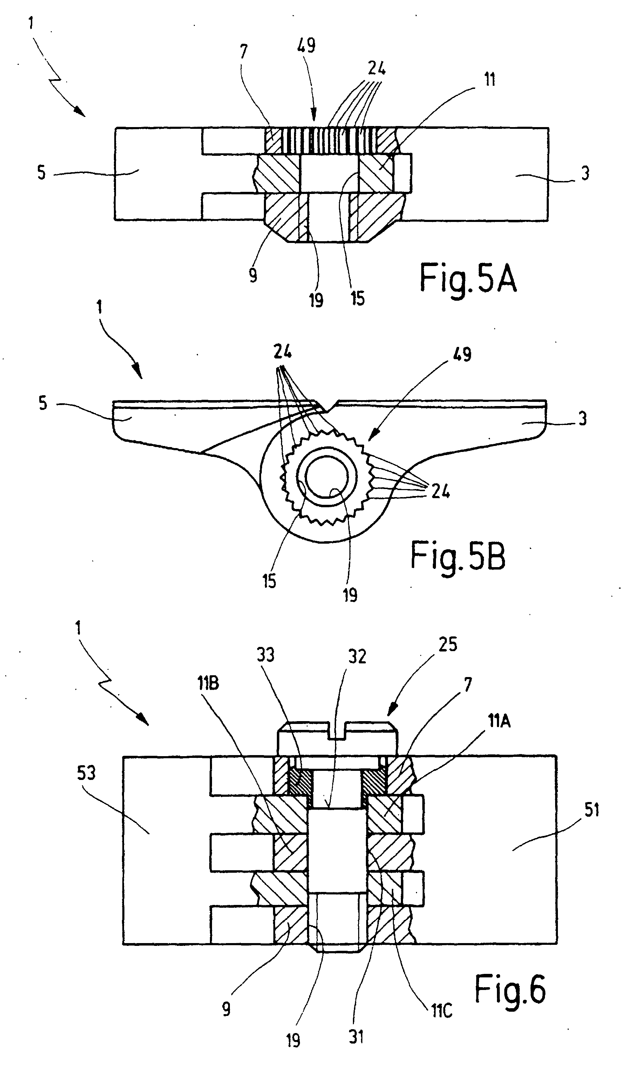

Figuren 5A und 5B zeigen eine teilweise geschnittene Seitenansicht und eine Draufsicht eines fünften Ausführungsbeispiel der Schraubverbindung 1, das sich von dem anhand der Figuren 1A bis 1D beschriebenen Ausführungsbeispiel lediglich dadurch unterscheidet, dass in die erste Durchgangsöffnung 13 im oberen Scharnierlappen 7 eine große Anzahl von Längsnuten 24 eingebracht sind, die parallel zur Richtung der Ein- und Ausschraubbewegung der Schraube verlaufen. Dadurch, dass die Längsnuten 24 einen nur sehr geringen Abstand voneinander aufweisen, ist eine Rändelung 49 gebildet, in die das Material der beim Einschrauben der Schraube zusammengedrückten Hülse 33 zur Ausbildung eines Formschlusses gedrückt wird beziehungsweise hineinfließt. Die Scharnierteile 3, 5 sind bei einem bevorzugten Ausführungsbeispiel mit Hilfe der MIM-Technologie hergestellt.

Figur 6 zeigt einen Querschnitt durch ein sechstes Ausführungsbeispiel der Schraubverbindung 1, die ein dreilappiges Scharnierteil 51 und ein zweilappiges Scharnierteil 53 umfasst, die ineinander gesteckt und mit Hilfe einer Schraube 25 miteinander verbunden sind. Gleiche Teile sind mit gleichen Bezugszeichen versehen, so dass insofern auf die Beschreibung zu den vorangegangenen Figuren verwiesen wird. Zwischen dem oberen Scharnierlappen 7 und dem unteren Scharnierlappen 9 sind mittlere Scharnierlappen 11A, 11B und 11C angeordnet. Der vorzugsweise als Führungsbund ausgebildete Ringbund 31 ist bei vollständig oder im wesentlichen vollständig eingeschraubter Schraube 25 in allen mittleren Scharnierlappen 11A, 11B, 11C angeordnet und weist eine dementsprechend große Länge auf. Dadurch ist ein Verkippen der Schraube 25 in den Durchgangsöffnungen der Scharnierlappen ausgeschlossen, so dass bei einer Kraftbeaufschlagung der Scharnierteile 51, 53 diese Kräfte nicht an die Hülse 33 der Schraube 25 übertragen wird, was zu Beschädigungen und einer Beeinflussung der Funktion der Hülse 33 führen könnte.

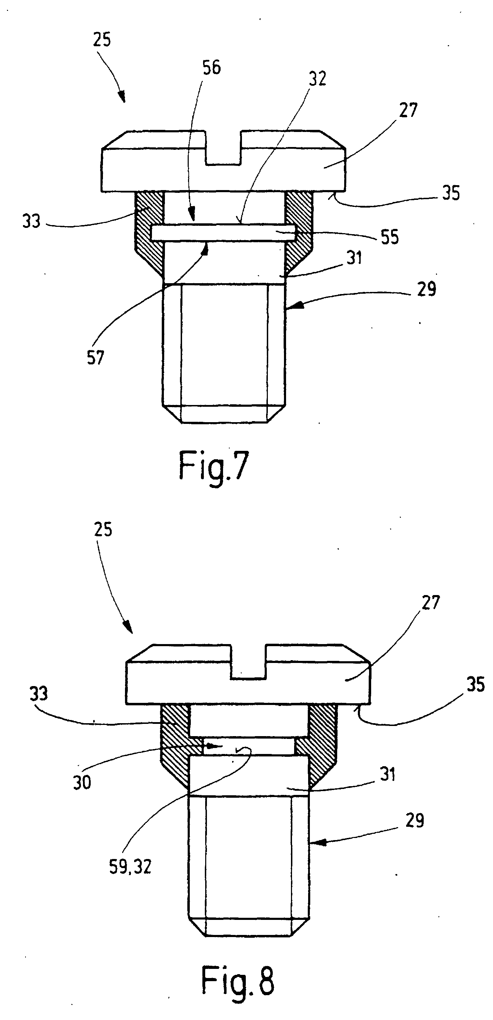

Figur 7 zeigt ein weiteres Ausführungsbeispiel der Schraube 25, an der eine aus einem elastischen Material bestehende Hülse 33 angebracht ist. Der Schraubenschaft 29 weist einen umlaufenden, also ringförmigen Steg 55 auf, der von der Hülse 33 vollständig umschlossen ist. Die sich in Richtung auf das Gewinde der Schraube 25 hin konisch verjüngende Hülse 33 überdeckt zu einem Teil die Anlagefläche des Ringbunds 31, der im eingeschraubten Zustand der Schraube 25 in mindestens einem mittleren Scharnierlappen angeordnet ist. Die Mitnehmerfläche 32, an der sich die Hülse 33 beim Lösen der Schraubverbindung abstützt, so dass die Hülse 33 von der Schraube aus den Scharnierteilen herausgedrückt wird, ist hier an der Oberseite 56 des kreisringförmigen Stegs 55 gebildet. Der Steg 55 bietet eine relativ große Anlagefläche für die Hülse 33 und gewährleistet ferner einen sicheren Halt der Hülse 33 am Schraubenschaft 29. Beim Zusammenquetschen der Hülse 33 beim Einschrauben der Schraube 25 bilden sowohl die Unterseite 35 des Schraubenkopfs 27 als auch die Unterseite 57 des Stegs 55 jeweils ein Widerlager, gegen die die Hülse 33 gedrängt wird.

Figur 8 zeigt eine Seitenansicht eines weiteren Ausführungsbeispiels der Schraube 25, deren Schraubenschaft 29 mit einer Ringnut 30 versehen ist, deren -quer zur Längserstreckung der Schraube 25 gesehene- Breite geringer ist als die Länge der Hülse 33. Diese ist derart am Schraubenschaft 29 angebracht, dass die Ringnut 30 von dem Hülsenmaterial zur Ausbildung eines Formschlusses ausgefüllt ist. Die in der Darstellung gemäß Figur 8 untere Seitenwand 59 der umlaufenden Ringnut 30 bildet die Mitnehmerfläche 32, an der sich die Hülse 33 beim Ausschrauben der Schraube abstützt.

Die anhand der Figuren 7 und 8 beschriebenen Ausführungsbeispiele der Schraube 25 sind ohne weiteres im Zusammenhang mit den anhand der Figuren 1 bis 6 beschriebenen Ausführungsbeispiele der Schraubverbindungen 1 einsetzbar, ohne dass dazu Veränderungen an den Scharnierteilen vorgenommen werden müssten.

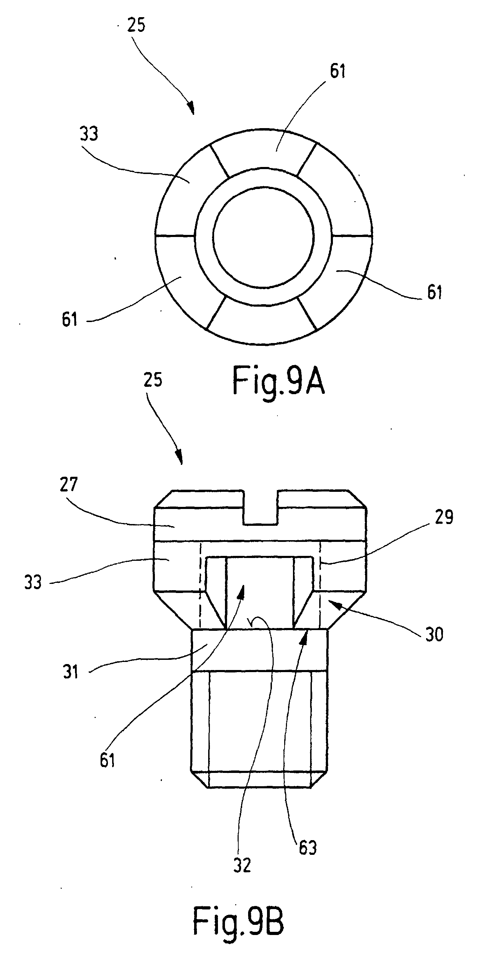

Figuren 9A und 9B zeigen jeweils eine Ansicht eine weiteren Ausführungsbeispiels der Schraube 25 für die in den Figuren 4A bis 4D dargestellten Scharnierteile 3, 5. Die an der Schraube 25 angebrachte Hülse 33 weist mehrere, bei diesem Ausführungsbeispiel insgesamt drei Ausnehmungen 61 aufweist, die zu der dem Gewinde der Schraube 25 zugewandten Stirnseite 63 der Hülse 33 hin offen sind. Die Innenkontur der Ausnehmungen 61 entspricht der Außenkontur der Wandsegmente 45 im oberen Scharnierlappen 7 (Figuren 4A bis 4D), so dass im eingeschraubten Zustand die Wandsegmente 45 in den Ausnehmungen 61 angeordnet sind. Bei dieser Ausführungsform dreht sich die Hülse 33 zu Beginn des Einschraubvorgangs gemeinsam mit der Schraube 25, bis die Hülse soweit auf die Wandsegmente 45 in der Durchgangsöffnung 13 im oberen Scharnierlappen 7 verlagert ist, bis die Wandsegmente 45 in die Ausnehmungen 61 der Hülse 33 eingreifen und die Hülse 33 daran hindern, sich mit der Schraube 25 weiterzudrehen. Die mit Hilfe der Wandsegmente 45 gegen ein Verdrehen gesicherte Hülse 33 liegt an ihrem einen Ende an der Unterseite des Schraubenkopfs 27 an und wird -während die Schraube 25 weiter eingeschraubt wird- von dieser in Richtung der Einschraubbewegung verschoben. Dabei wird die Hülse 33 praktisch wie eine Haube auf die Wandsegmente 45 im oberen Scharnierlappen 7 aufgesetzt, wobei die Ausnehmurigen 61 vorzugsweise so groß sind, dass dies im wesentlichen kräftefrei erfolgt. Das Zusammendrücken der Hülse 33 erfolgt erst dann, wenn die Hülse 33 soweit über die Wandsegmente 45 geschoben ist, bis sie beispielsweise gegen die Anlageschulter 17 gepresst und zwischen dieser und der Schraubenkopfunterseite eingespannt wird. Besonders vorteilhaft bei diesem Ausführungsbeispiel ist, dass zur Ausbildung der Sicherung gegen ein Verdrehen der Hülse 33 nur sehr geringe Kräfte aufgebracht werden müssen, da hierzu das Hülsenmaterial nicht von oben in die Längsnuten 24 in der Umfangsfläche der ersten Durchgangsoffnung 13 gepresst werden muss, wie zum Beispiel bei den anhand der vorangegangenen Figuren beschriebenen Schraubverbindungen 1.

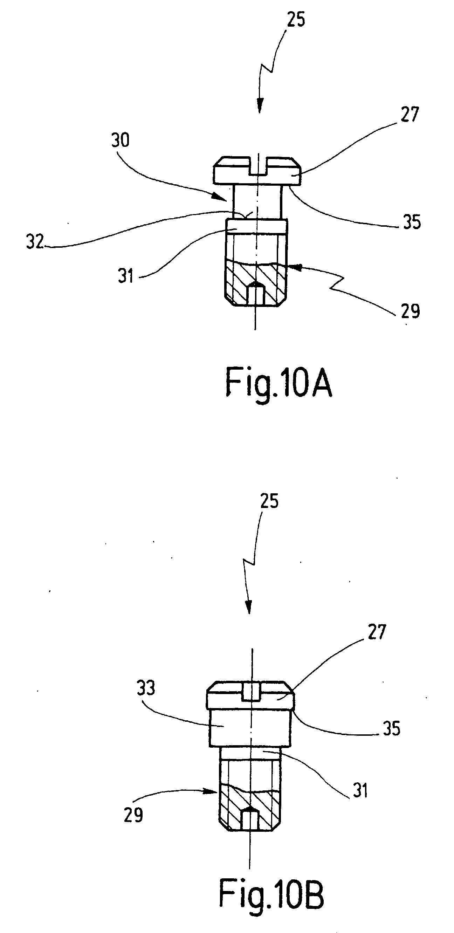

Figur 10A zeigt ein weiteres Ausführungsbeispiel der Schraube 25, nämlich einen Rohling, der noch keine elastische Hülse 33 aufweist. Die Schraube 25 weist eine umlaufende Ringnut 30 auf, die unmittelbar in die Unterseite 35 des Schraubenkopfs 27 angrenzt. In Figur 10B ist die Schraube 25 mit aufgespritzter Hülse 33 dargestellt. Die Hülse 33 ist kreiszylindrisch ausgebildet und weist keine Verjüngung auf. Der Außendurchmesser der Hülse 33 ist kleiner der Außendurchmesser des Schraubenkopfs 27, jedoch größer als der Durchmesser des Ringbunds 31.

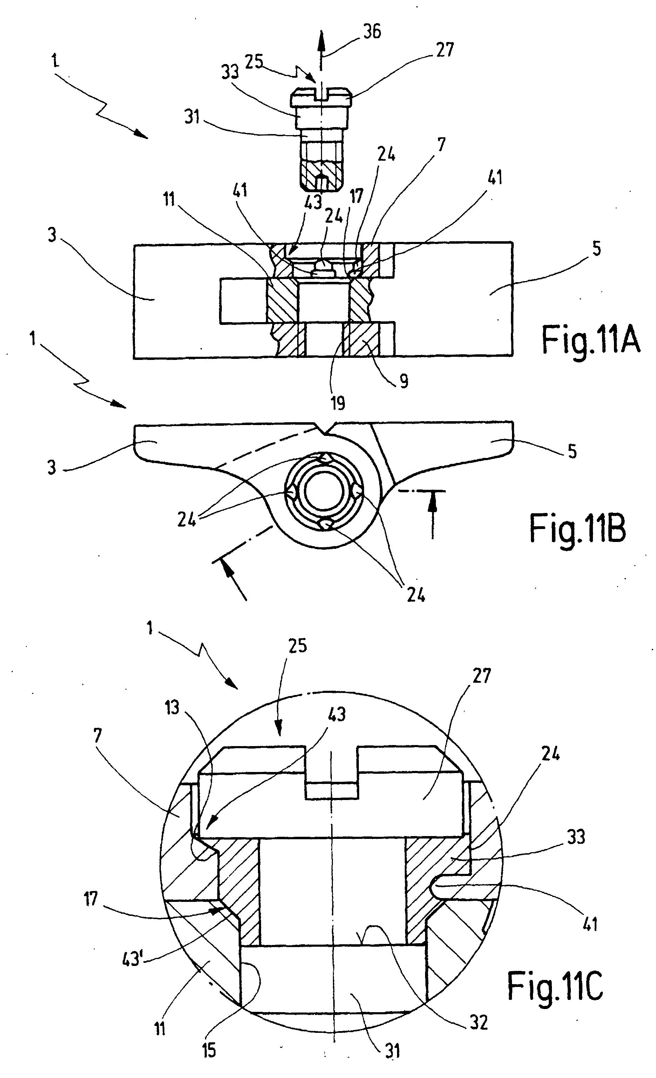

Figuren 11A und 11B zeigen einen Längsschnitt beziehungsweise eine Draufsicht auf ein weiteres Ausführungsbeispiel der Schraubverbindung 1. Teile, die bereits anhand der vorangegangenen Figuren beschrieben sind, sind mit gleichen Bezugszeichen versehen, so dass insofern auf die Beschreibung zu den Figuren 1 bis 10B verwiesen wird. Es ist ersichtlich, dass der obere Scharnierlappen 7 vier Längsnuten 24 aufweist, die -wie bei dem anhand der Figuren 3A bis 3D beschriebenen Ausführungsbeispiel der Schraubverbindung 1- von der Oberseite 39 des Scharniers her in die Umfangsfläche der ersten Durchgangsöffnung 13 eingebracht sind. Dabei ist durch das verdrängende Material des oberen Scharnierlappens 7 jeweils eine als Mitnehmer wirkende Nase 41 gebildet, die auf der Oberseite des mittleren Scharnierlappens 11 aufliegen. In die erste Durchgangsöffnung 13 ist ferner von der Oberseite des Scharnierteils her eine Senkung 43 eingebracht. Der Grund der Senkung 43 befindet in etwa in der Mitte des oberen Scharnierlappens.

Auch die zweite Durchgangsöffnung 15 im mittleren Scharnierlappen 11 ist mit einer Senkung 43' versehen, die in die Oberseite des mittleren Scharnierlappens 11 eingebracht ist. Form und Tiefe der Senkung 43' sind so gewählt, dass trotz des Durchmesserunterschieds zwischen der ersten und zweiten Durchgangsöffnung 13, 15 kein Anlageschultersitz auf der Oberseite des einlappigen Scharnierteils gebildet ist. Die Anlageschulter 17 läuft vielmehr -entsprechend der Form der Senkung 43'- unter einem Winkel zu einer gedachten Horizontalen.

Figur 11C zeigt einen Ausschnitt der anhand der Figuren 11A und 11B beschriebenen Schraubverbindung 1 in vergrößertem Maßstab und im zusammenmontierten Zustand, das heißt, die Schraube 25 ist in die Gewindebohrung 19 eingeschraubt. Die Ausführungsform der Schraube 25 entspricht dem anhand der Figuren 10A und 10B beschriebenen Ausführungsbeispiel der Schraube 25. Aus Figur 11C ist ersichtlich, dass die beim Einschrauben der Schraube 25 in die Gewindebohrung 19 an den Senkungen 43 und 43' sowie an den Nasen 41 anstoßende Hülse 33 derart zusammengequetscht wird, dass deren Material in die Längsnuten 24 und in den Zwischenraum zwischen der Schraube 25 und den ersten und zweiten Durchgangsöffnungen 13, 15 in den oberen und mittleren Scharnierlappen 7, 11 gedrängt wird. Die Gangregulierung für eine spielfreie Bewegung des Scharniers erfolgt hier an der schräg zur horizontal verlaufenden Fläche der Senkung 43', während die Sicherung gegen ein selbständiges Lösen der Schraube 25 durch die auf die Unterseite 35 des Schraubenkopfs 27 wirkenden elastischen Kräfte der in axialer Richtung mit Druckkräften beaufschlagten Hülse 33 gewährleistet wird.

Die oben beschriebenen Scharniere erhalten durch die Schraube 25, die Gegenstand der Erfindung ist, einen gleichmäßigen, dauerhaft guten Gang. Es hat sich gezeigt, dass die Festigkeit des Scharniergangs regulierbar und zumeist auch nach mehreren tausend Bewegungen des Scharniers annähernd gleich ist. Es hat sich gezeigt, dass beim automatischen Verschrauben der Schraubverbindung 1 eine nur sehr geringe Streuung im Scharniergang auftritt, die bei einem vorteilhaften Ausführungsbeispiel im Bereich von 5 Ncm liegt Bei einem vorteilhaften Ausführungsbeispiel beträgt der kleinste Scharniergang ca. 2 Ncm und der größte Scharniergang ungefähr 7 Ncm. Es hat sich gezeigt, dass die erfindungsgemäße Schraube 25 bei Gelenken mit Spielpassung nur noch ca. 2 Ncm bis 3 Ncm Streuung und bei durch gesteckte Fertigung hergestellten Gelenken nur noch ca. 5 Ncm bis 6 Ncm Streuung aufweist.

Ferner hat sich herausgestellt, dass bei der erfindungsgemäßen Schraubverbindung 1 die Schraube 25 sich nicht selbständig lösen kann und beispielsweise auch nach 20.000 Scharnierbewegungen noch ein Lösedrehmoment von ca. 2 Ncm aufweist.

Mit Hilfe der erfindungsgemäßen Schraube 25 ist ein Fassungsspiel im Scharniergelenk von bis zu 0,06 mm ausgleichbar. Dadurch ist auch bei in Einzelfertigung hergestellten Teilen mit schlechter beziehungsweise minderwertiger Passung ein sehr guter, präzise einstellbarer Scharniergang realisierbar. Die erfindungsgemäße Schraube 25 ist ohne weiteres auch in Kunststofffassungen einsetzbar.

Alle anhand der Figuren beschriebenen Ausführungsbeispiele der Schraubverbindung 1 zeichnen sich insbesondere durch eine hohe Funktionssicherheit aus. Sie gewährleisten eine Schraubsicherung gegen ein selbständiges Lösen der Schraubverbindung und eine Regulierung des Gangs des Scharniers. Überdies sind die einstückig miteinander verbundene Schraube und Hülse mehrfach wiederverwendbar.

Die in den Figuren erläuterte Schraubverbindung zeichnet sich dadurch aus, dass zwischen der Hülse und der Schraube in axialer Richtung gesehen, also in Richtung der Ein- beziehungsweise Ausschraubbewegung der Schraube, eine Kopplung gegeben ist. Beim Ein- und Ausschrauben der Schraube wird also die Hülse mit der Schraube in axialer Richtung bewegt. Die Schraube kann sich dabei gegenüber der Hülse frei drehen, es ist also, wie oben. gesagt, eine Relativdrehbewegung zwischen Schraube und Hülse möglich. Durch die spezielle Ausgestaltung der die Schraube und insbesondere die Hülse aufnehmenden Durchgangsöffnung ist andererseits sichergestellt, dass die Hülse verdrehsicher gehalten wird. Die Verdrehsicherung wird durch Längsnuten gewährleistet, gegebenenfalls auch durch zusätzliche, radial vorstehende Nasen, die von außen in das Material der Hülse eingreifen und deren Verdrehung verhindern. Diese Ausgestaltung gewährleistet eine hohe Sicherheit gegen ein versehentliches beziehungsweise ungewolltes Lösen der Schraube.

## Patentansprüche

1. Schraubverbindung (1) für Scharnierteile (3,5), insbesondere einer Brillenfassung, mit einer die ineinandergreifenden Scharnierteile, die einen oberen und unteren sowie wenigstens einen mittleren Scharnierlappen (7,9,11) umfassen, miteinander verbindenden Schraube (25), welche einen Schraubenkopf (27) und einen eine erste Durchgangsöffnung (13) im oberen Scharnierlappen (7) und eine zweite Durchgangsöffnung (15) im mittleren Scharnierlappen (11) durchgreifenden Schraubenschaft (29) umfasst, der mittels eines Gewindes im unteren Scharnierlappen (9) verschraubbar ist, und mit einer den Schraubenschaft (29) umgebenden, elastische Eigenschaften aufweisenden Hülse (33), die im eingeschraubten Zustand mit den oberen und mittleren Scharnierlappen (7,9) zusammenwirkt, wobei der Durchmesser (D2) der zweiten Durchgangsöffnung (15) kleiner oder gleich dem Durchmesser (D1) der ersten Durchgangsöffnung (13) ist und wobei die Schraube (25) mindestens eine Anlagefläche für die Hülse (33) mit mindestens einer in Richtung der Ausschraubbewegung der Schraube (25) ausgerichteten Mitnehmerfläche (32) aufweist, **dadurch gekennzeichnet, dass** der Schraubenschaft (29) einen Ringbund (31) aufweist, der im eingeschraubten Zustand im mittleren Scharnierlappen (11;11A,11B,11C) angeordnet ist.

2. Schraubverbindung nach Anspruch 1, **dadurch gekennzeichnet, dass** im Schraubenschaft (29) mindestens eine, vorzugsweise umlaufend ausgebildete, Ringnut (30) vorgesehen ist, in der die Hülse (33) angeordnet ist oder in die die Hülse (33) mit einem Längsabschnitt eingreift.

3. Schraubverbindung nach Anspruch 1 oder 2, **dadurch gekennzeichnet, dass** der Schraubenschaft (29) mindestens einen, vorzugsweise umlaufend ausgebildeten, von der Hülse (33) zumindest teilweise umschlossenen Steg (55) aufweist.

4. Schraubverbindung nach einem der vorherigen Ansprüche, **dadurch gekennzeichnet, dass** der Ringbund (31) als Führungsbund dient.

5. Schraubverbindung nach einem der vorhergehenden Ansprüche, **dadurch gekennzeichnet, dass** die Hülse (33) derart ausgebildet ist, dass sie -quer zur Längserstreckung der Schraube (25) gesehen- den Ringbund (31) zumindest bereichsweise überragt.

6. Schraubverbindung nach einem der vorhergehenden Ansprüche, **dadurch gekennzeichnet, dass** der Durchmesser des Schraubenschafts (29) im Bereich der Ringnut (30) kleiner ist als der Durchmesser (D2) der zweiten Durchgangsöffnung (15).

7. Schraubverbindung nach einem der vorhergehenden Ansprüche, **dadurch gekennzeichnet, dass** in der Umfangsflache der ersten Durchgangsöffnung (13) mindestens eine parallel oder im wesentlichen parallel zur Richtung der Ein- und Ausschraubbewegung der Schraube (25) verlaufende, zur Sicherung der Hülse (33) gegen Verdrehen dienende Längsnut (24) vorgesehen ist.

8. Schraubverbindung nach Anspruch 7, **dadurch gekennzeichnet, dass** in die Umfangsfläche der ersten Durchgangsöffnung (13) mindestens zwei, -vorzugsweise gleich große- Längsnuten (24) eingebracht sind und dass die zwischen den Längsnuten (24) angeordneten Wandsegmente (45) der Umfangsfläche (45) vorzugsweise im wesentlichen so groß sind wie die Längsnuten (24).

9. Schraubverbindung nach einem der vorhergehenden Ansprüche, **dadurch gekennzeichnet, dass** die Hülse (33) an ihrem dem Ringbund (31) gegenüberliegenden Ende unmittelbar an der Unterseite (35) des Schraubenkopfs (27) oder an einem zylindrischen Ansatz (37) abstützbar ausgebildet ist.

10. Schräubverbindung nach einem der vorhergehenden Ansprüche, **dadurch gekennzeichnet, dass** der Durchmesser des Schraubenkopfs (27) oder der Durchmesser des Ansatzes (37) kleiner ist als der Durchmesser (D1) der ersten Durchgangsöffnung (13).

11. Schraubverbindung nach einem der vorhergehenden Ansprüche, **dadurch gekennzeichnet, dass** im eingeschraubten Zustand die Hülse (33) derart verformt ist, dass deren Material in den zwischen dem Schraubenschaft (29) und der zweiten Durchgangsöffnung (15) gebildeten Ringraum und/oder in den Zwischenraum zwischen dem Schraubenkopf (27) beziehungsweise dem Ansatz (37) und/oder in die mindestens eine Längsnut (24) gedrückt ist.

12. Schraubverbindung nach einem der vorhergehenden Ansprüche, **dadurch gekennzeichnet, dass** die Hülse (33) im Querschnitt kreisringförmig ausgebildet und gegebenenfalls an ihrem dem Schraubenkopf (27) abgewandten Ende einen konischen, sich in Richtung auf das Gewinde verjüngenden Abschnitt aufweist.

13. Schraubverbindung nach einem der vorhergehenden Ansprüche, **dadurch gekennzeichnet, dass** die Hülse (33) an ihrer dem Gewinde zugewandten Ende mit mindestens einer Ausnehmung (61) zur Aufnahme des Wandsegments (45) versehen ist.

14. Schraubverbindung nach einem der vorhergehenden Ansprüche, **dadurch gekennzeichnet, dass** die zweite Durchgangsöffnung (15) im Querschnitt kreisförmig ausgebildet und gegebenenfalls an ihrer dem Schraubenkopf (27) zugewandten Öffnung konisch (Senkung 43') angefast ist.

## Claims

1. A screw connection (1) for hinge parts (3, 5), especially of a spectacle frame, with a screw (25) connecting together the hinge parts engaging in one another, which comprise an upper and lower and at least one middle hinge lug (7, 9, 11), the screw having a screw head (27) and a screw shank (29) which passes through a first passage (13) in the upper hinge lug (7) and a second passage (15) in the middle hinge lug (11) and can be screwed into the lower hinge lug (9) by means of a thread, and with a sleeve (33) having elastic properties surrounding the screw shank (29) and cooperating in the screwed in state with the upper and middle hinge lugs (7, 9), wherein the diameter (D2) of the second passage (15) is smaller than or equal to the diameter (D1) of the first passage (13) and wherein the screw (25) comprises at least one abutment surface for the sleeve (33) with at least one entraining surface (32) facing in the direction of the unscrewing movement of the screw (25), **characterized in that** the screw shank (29) has an collar (31) which is located in the middle hinge lug (11; 11A, 11B, 11C) in the screwed-in state.

2. A screw connection according to claim 1, **characterized in that** at least one annular groove (30), preferably formed all round, is provided in the screw shank (29), in which groove the sleeve (33) is disposed or in which a longitudinal section of the sleeve (33) engages.

3. A screw connection according to claim 1 or 2, **characterized in that** the screw shank (29) comprises at least one rib (55), preferably formed all round, at least partially enclosed by the sleeve (33).

4. A screw connection according to any of the preceding claims, **characterized in that** the collar (31) serves as a guide collar.

5. A screw connection according to any of the preceding claims, **characterized in that** the sleeve (33) is so formed that it projects at least locally beyond the collar (31), as regarded transverse to the longitudinal extend of the screw (25).

6. A screw connection according to any of the preceding claims, **characterized in that** the diameter of the screw shank (29) is smaller in the region of the annular groove (30) than the diameter (D2) of the second passage (15).

7. A screw connection according to any of the preceding claims, **characterized in that** at least one longitudinal groove (24) parallel to or substantially parallel to the direction of the screwing in and out movement of the screw (25) is provided in the peripheral surface of the first passage (13), serving to secure the sleeve (33) against rotation.

8. A screw connection according to claim 7, **characterized in that** at least two longitudinal grooves (24), preferably of the same size, are formed in the peripheral surface of the first passage (13) and **in that** the wall segments (45) of the peripheral surface (45) disposed between the longitudinal grooves (24) are preferably substantially as large as the longitudinal grooves (24).

9. A screw connection according to any of the preceding claims, **characterized in that** the sleeve (33) is formed for direct abutment at its end opposite the collar (31) on the underside (35) of the screw head (27) or on a cylindrical shoulder (37).

10. A screw connection according to any of the preceding claims, **characterized in that** the diameter of the screw head (27) or the diameter of the shoulder (37) is smaller than the diameter (D1) of the first passage (13).

11. A screw connection according to any of the preceding claims, **characterized in that** the sleeve (33) is so deformed in the screwed in state that its material is forced into the annular space formed between the screw shank (29) and the second passage (15) and/or into the space between the screw head (27) respectively the shoulder (37) and/or into the at least one longitudinal groove (24).

12. A screw connection according to any of the preceding claims, **characterized in that** the sleeve (33) is of circular form in cross-section and optionally comprises a conical section tapering in the direction of the thread at its end remote from the screw head (27).

13. A screw connection according to any of the preceding claims, **characterized in that** the sleeve (33) is provided with at least one recess (61) at its end facing the thread for reception of the wall segment (45).

14. A screw connection according to any of the preceding claims, **characterized in that** the second passage (15) is circular in cross-section and is optionally chamfered conically (countersink 43') at its opening facing the screw head (27).

## Revendications

1. Liaison par vis (1) pour des parties de charnière (3, 5), notamment pour une monture de lunettes, comprenant des parties de charnière s'interpénétrant, ayant une patte supérieure et une patte inférieure ainsi qu'au moins une patte intermédiaire de charnière (7, 9, 11), réunies par une vis (25) ayant une tête (27) et un corps de vis (29) passant dans un premier orifice traversant (13) de la patte supérieure (7) et un second orifice traversant (15) de la patte intermédiaire (11), le corps de vis étant vissé dans un filetage de la patte inférieure (9) de la charnière, avec un manchon (33) ayant des propriétés élastiques, entourant le corps de vis (29), et coopérant avec la patte supérieure et la patte intermédiaire (7, 9) de la charnière, à l'état vissé, le diamètre (D2) du second orifice traversant (15) étant inférieur ou égal au diamètre (D1) du premier orifice traversant (13), alors que la vis (25) comporte au moins une surface d'appui pour le manchon (33) avec au moins une surface d'entraînement (32) alignée dans la direction du mouvement de dévissage de la vis (25), **caractérisée en ce que** le corps de vis (29) comporte une collerette annulaire (31) qui arrive dans la patte intermédiaire (11 ; 11A, 11B, 11C) lorsque la vis est en position vissée.

2. Liaison à vis selon la revendication 1, **caractérisée en ce que** le corps de vis (29) comporte au moins une rainure annulaire (30), de préférence périphérique, recevant le manchon (33) ou dans laquelle le manchon (33) pénètre avec un segment de longueur.

3. Liaison à vis selon l'une quelconque des revendications 1 ou 2, **caractérisée en ce que** le corps de vis (29) comporte au moins une collerette (55), de préférence périphérique, au moins en partie entourée par le manchon (33).

4. Liaison à vis selon l'une quelconque des revendications précédentes, **caractérisée en ce que** la collerette annulaire (31) constitue une collerette de guidage.

5. Liaison à vis selon l'une quelconque des revendications précédentes, **caractérisée en ce que** le manchon (33) est réalisé pour que dans la direction transversale par rapport à l'extension longitudinale de la vis (25) il dépasse au moins par endroits de la collerette annulaire (31).

6. Liaison à vis selon l'une quelconque des revendications précédentes, **caractérisée en ce que** le diamètre du corps de vis (29), au niveau de la rainure annulaire (30), est inférieur au diamètre (D2) du second orifice de passage (15).

7. Liaison à vis selon l'une quelconque des revendications précédentes, **caractérisée en ce que** la surface périphérique du premier orifice de passage (13) a au moins une rainure longitudinale (24) parallèle ou essentiellement parallèle à la direction du mouvement de vissage ou de dévissage de la vis (25), pour bloquer le manchon (33) en rotation.

8. Liaison à vis selon la revendication 7, **caractérisée en ce que** la surface périphérique du premier orifice traversant (13) comporte au moins deux rainures longitudinales (24), de préférence de mêmes dimensions, et les segments de paroi (45) de la surface périphérique (45) entre les rainures longitudinales (24) sont essentiellement aussi grands que les rainures longitudinales (24).

9. Liaison à vis selon l'une quelconque des revendications précédentes, **caractérisée en ce qu'** à son extrémité opposée à la collerette annulaire (31), le manchon (33) s'appuie directement contre la face inférieure (35) de la tête de vis (27) ou contre un prolongement cylindrique (37).

10. Liaison à vis selon l'une quelconque des revendications précédentes, **caractérisée en ce que** le diamètre de la tête de vis (27) ou le diamètre du prolongement (37) est inférieur au diamètre (D1) du premier orifice traversant (13).

11. Liaison à vis selon l'une quelconque des revendications précédentes, **caractérisée en ce qu'** à l'état vissé, le manchon (33) est déformé de façon que sa matière soit poussée dans l'espace annulaire formé entre le corps de vis (29) et le second orifice traversant (15) et/ou dans l'espace intermédiaire entre la tête de vis (27) ou le prolongement (37) et/ou dans au moins une rainure longitudinale (24).

12. Liaison à vis selon l'une quelconque des revendications précédentes, **caractérisée en ce que** le manchon (33) a une section en anneau de cercle et le cas échéant son extrémité opposée à la tête de vis (27) présente un segment conique allant en diminuant en direction du filetage.

13. Liaison à vis selon l'une quelconque des revendications précédentes, **caractérisée en ce que** le manchon (33) comporte, à son extrémité tournée vers le filetage, au moins une cavité (61) pour recevoir le segment de paroi (45).

14. Liaison à vis selon l'une quelconque des revendications précédentes, **caractérisée en ce que** le second orifice traversant (15) a une section circulaire et le cas échéant son ouverture tournée vers la tête de vis (27) est biseauté coniquement (partie fraisée 43').
